(19) Europäisches Patentamt
European Patent Office
Office européen des brevets

(11) Publication number: **0 159 730**
**A2**

(12) **EUROPEAN PATENT APPLICATION**

(21) Application number: **85200339.1**

(22) Date of filing: **08.03.85**

(51) Int. Cl.⁴: **B 01 D 53/34**, C 01 B 17/04

(30) Priority: **27.03.84 GB 8407843**

(43) Date of publication of application: **30.10.85 Bulletin 85/44**

(84) Designated Contracting States: **AT BE CH DE FR GB IT LI NL SE**

(71) Applicant: **SHELL INTERNATIONALE RESEARCH MAATSCHAPPIJ B.V., Carel van Bylandtlaan 30, NL-2596 HR Den Haag (NL)**

(72) Inventor: **Ramamurthy, Ramalinga, Badhuisweg 3, NL-1031 CM Amsterdam (NL)**
Inventor: **Sie, Swan Tiong, Badhuisweg 3, NL-1031 CM Amsterdam (NL)**

(74) Representative: **Aalbers, Onno et al, P.O. Box 302, NL-2501 CH The Hague (NL)**

(54) **Process for the removal of sulphur compounds from off-gases.**

(57) Removal of sulphur compounds from the off-gas of a sulphur recovery unit of the Claus type, in which this off-gas is mixed with an $H_2S$-rich gas to form a gas mixture having a higher $H_2S$ to $SO_2$ molar ratio than the off-gas, which gas mixture is passed at a temperature below 300°C over a Claus catalyst and a second off-gas is separated from the catalyst, said second off-gas is subsequently passed over a regenerable solid metal oxide absorbent to absorb $H_2S$, spent metal oxide absorbent is regenerated, thereby producing a gas rich in sulphur compounds which is introduced into a sulphur recovery unit of the Claus type.

EP 0 159 730 A2

K 5721

PROCESS FOR THE REMOVAL OF SULPHUR COMPOUNDS FROM OFF-GASES

The invention relates to a process for the removal of sulphur compounds from the off-gas of a sulphur recovery unit of the Claus type, i.e. a unit suitable for carrying out a Claus type process.

Hydrogen sulphide($H_2S$)-containing gases become available, for example, in oil refineries and from processing coke-oven gas. Natural gas may also contain $H_2S$.$H_2S$ may be removed from $H_2S$-containing gases by absorption in a regenerable absorbent. Subsequent regeneration of the absorbent yields a gas having a much higher $H_2S$ content than the $H_2S$-containing starting gas. $H_2S$-containing gases, for example those obtained by such regeneration, are usually fed to a sulphur recovery unit of the Claus type for the production of elemental sulphur. "Elemental sulphur" is hereinafter also referred to as "sulphur". The off-gases obtained in a sulphur recovery unit of the Claus type are preferably further treated in order to reduce the sulphur content thereof to a very low level before final discharge into the atmosphere. These off-gases are hereinafter also referred to as "Claus off-gases".

In a sulphur recovery unit of the Claus type an $H_2S$-containing gas is partially combusted with oxygen or an oxygen-containing gas, such as air, in a furnace referred to herein as "thermal zone". In the thermal zone the following reaction takes place with regard to sulphur formation:

$$6H_2S + 3O_2 \rightleftharpoons 6/_x S_x + 6H_2O \quad (1)$$

which can be considered as occurring in two steps:

$$2H_2S + 3O_2 \rightleftharpoons 2SO_2 + 2H_2O \quad (2)$$

$$4H_2S + 2SO_2 \rightleftharpoons 6/_x S_x + 4H_2O \quad (3)$$

In the thermal zone the $H_2S$ is converted to sulphur in accordance with reaction (1), the quantity of oxygen or oxygen-containing gas being such that only one third of all $H_2S$ can be oxidized to $SO_2$ in accordance with reaction (2). The effluent gas

from the thermal zone contains as major constituents $H_2S$, $SO_2$, sulphur vapour, nitrogen, and water vapour.

The effluent gas from the thermal zone has a temperature usually in the range of from 600°C to 1650°C and is cooled to condense most of the sulphur vapour present, to a temperature suitably in the range of from 120°C to 200°C. Thus, sulphur is recovered as a valuable product. The gases are then reheated to a temperature usually in the range of from 200°C to 300°C and introduced into a catalytic zone where $H_2S$ reacts with $SO_2$ to produce more sulphur in accordance with reaction (3). The effluent from the catalytic zone is cooled to condense sulphur. The catalytic zone is usually formed by a plurality, normally two or three, catalyst beds with means for intermediate cooling to condense sulphur and means for reheating the gas prior to feeding to the next catalyst bed.

The remaining gases as obtained after condensation of sulphur from the gases leaving the last catalytic zone still contain a certain amount of $H_2S$ and $SO_2$ in a molar ratio $H_2S$ to $SO_2$ of about 2:1, since the yield of sulphur is not quantitative. A well known process for lowering the $H_2S$ content of these Claus off-gases involves incineration of the gases in a furnace as a result of which all $H_2S$ is converted into $SO_2$. Viewed in the light of increasing stringent requirements with respect to air pollution abatement, disposing of Claus off-gases in this way is less desirable. Moreover it involves a certain loss of sulphur.

An attractive procedure for lowering the sulphur content of Claus off-gases is based on the catalytic reduction of $SO_2$ in the Claus off-gases to $H_2S$ which is subsequently removed by selective absorption with a suitable absorption solvent. In this procedure, the bulk of the desorbed $H_2S$ after regeneration of the absorption solvent, is fed to a Claus-type process. The gas from which the $H_2S$ has been removed contains quite minor amounts of $H_2S$ and can be incinerated without objection. The high efficiency of this procedure is, however, accompanied with relatively high operating

costs. The Claus off-gases contain apart from sulphur compounds a relatively large quantity of water vapour, which should at least partly be removed from the off-gases to avoid unacceptable dilution of the absorption solvent due to condensed water vapour. The Claus off-gases are therefore passed through a condensing unit having a large, but costly cooling capacity. The condensate contains absorbed $H_2S$ which has to be removed before the condensed water can be disposed of.

In another known process for removing hydrogen sulphide from off-gases, the off-gases are contacted with a solid metal oxide absorbent absorbing hydrogen sulphide. In such a process the contact of the off-gases with the solid absorbent may take place at such a temperature that there is no risk of condensation of water vapour. Although this latter type of process may be attractive from the point of view of cost-saving, it has as major disadvantage that such a process is only suitable for treating off-gases containing only minor amounts of sulphur compounds, in particular sulphur dioxide, in order to not exceed the acceptable emission levels.

It is an object of the present invention to provide a process for the removal of sulphur compounds from the off-gas of a sulphur recovery unit of the Claus type, which process is relatively cheap compared with the known processes, with which the stringent requirements in respect of air pollution abatement can be met, and which process gives a high yield of elemental sulphur.

The invention, accordingly, provides a process for the removal of sulphur compounds from the off-gas of a sulphur recovery unit of the Claus type, which process comprises the following consecutive steps:-

(a) mixing the said off-gas and a gas having a higher content of hydrogen sulphide than the said off-gas to form a gas mixture having an increased hydrogen sulphide to sulphur dioxide molar ratio compared to the off-gas passing the mixture thus formed at a temperature below 300°C over a catalyst promoting the

Claus reaction, and separating a second off-gas from the said catalyst;

(b) passing the said second off-gas over a regenerable, solid metal oxide absorbent to absorb hydrogen sulphide with formation of a spent metal oxide absorbent and separating the unabsorbed portion of the second off-gas from the spent metal oxide absorbent;

(c) regenerating the spent metal oxide absorbent, thereby producing regenerated absorbent and a gas rich in sulphur compounds; and

(d) re-using in step (b) the regenerated absorbent obtained in step (c) for further hydrogen sulphide absorption and introducing the gas rich in sulphur compounds produced in step (c) into a sulphur recovery unit of the Claus type.

Preferably, a bleedstream of the hydrogen-sulphide containing gas being fed to the sulphur recovery unit is used as the gas having a higher content of hydrogen sulphide than the said off-gas of the sulphur recovery unit. Appropriate catalysts for use in the proposed process are the ones which are known for use in Claus sulphur recovery processes. Very suitable Claus catalysts comprise aluminium oxide, such as aluminas, which may be activated, or bauxite. As a consequence of the presence of excess $H_2S$ in the gas mixture which is passed over a catalyst in step (a) of the proposed process, the equilibrium of the reaction between $H_2S$ and $SO_2$ is shifted towards a further conversion of these compounds to elemental sulphur. This means that the amount of $SO_2$ remaining in the off-gas is substantially reduced compared with the original reaction off-gas and can even be substantially eliminated if required. Thereto, the molar ratio of $H_2S$ to $SO_2$ of the gas mixture which is passed over the catalyst in step (a) of the process is preferably at least 3:1, and, more preferably, at least 4:1. In order to further promote conversion of $SO_2$ the temperature in step (a) of the process is kept below 300°C and preferably below 250°C.

Step (a) of the process according to the invention as defined hereinbefore may be carried out in different ways. Firstly, step (a) may form an integral part of the sulphur recovery unit, in that it may be carried out in a catalytic bed of a Claus sulphur recovery unit. Such a Claus sulphur recovery unit normally comprises at least two catalyst beds with in between a sulphur discharge step. To have a full profit of step (a), this step, if integrated in the sulphur recovery unit, is carried out in the last catalyst bed of the Claus sulphur recovery unit. If step (a) is carried out in this manner the temperature during the catalytic conversion of $SO_2$ should be kept above the dew point of sulphur, to prevent plugging of the catalyst bed due to condensation of sulphur. Secondly step (a) of the proposed process may be carried out in a unit separate from the sulphur recovery unit. If operated so, it may be advantageous to have two parallel catalyst beds, so that at any time one of the beds is used in the process whilst the other one is reactivated. This enables operation below the dew point of sulphur, which may be attractive if the gas mixture as it is passed over the catalyst contains only a relatively small quantity of excess $H_2S$. The catalyst bed plugged with condensed sulphur can be cleaned by interrupting the flow of reaction off-gas with excess $H_2S$ and causing a gaseous medium to pass at elevated temperature over the sulphur-loaded catalyst to vaporize sulphur therefrom until the activity of the catalyst composition has been restored. The gaseous medium may be an inert gas, removing the sulphur in gaseous form from the catalyst. The spent gas loaded with sulphur should be lowered in temperature for removing the sulphur therefrom by condensation. The gaseous medium may also be an oxygen-containing gas, e.g. air, able to liberate the sulphur by conversion to $SO_2$. The $SO_2$ rich gas so formed may be recirculated to the sulphur recovery unit for producing a further quantity of elemental sulphur.

The off-gas with a relatively low $SO_2$ content as obtained in step (a) of the proposed process, is subsequently passed over a

regenerable, solid metal oxide absorbent absorbing $H_2S$. Apart from hydrogen sulphide and sulphur dioxide, Claus off-gases may contain minor quantities of other sulphur compounds, for example, COS and $CS_2$. By passing the second off-gas in step (b) over a metal oxide absorbent absorbing hydrogen sulphide, substantially all of the hydrogen sulphide, and, if present, COS and $CS_2$, is removed from the gas, leaving very little sulphur dioxide. Suitable absorbents are the oxides of alumina, iron, zinc and manganese, of which zinc oxide is preferred in view of its thermal stability, relatively low price and good regenerability. A major advantage of the use of a solid absorbent as compared to a liquid absorbent consists herein that the off-gases which contain a large amount of water vapour do not need to be cooled to below the dew point of water vapour for condensation and removal of the formed water. The $H_2S$ absorption by a metal oxide absorbent is preferably carried out at a temperature of from about 200°C to about 800°C, and, more preferably, at a temperature of from about 300°C to about 600°C. The absorbents may be used in a fixed, moving or fluidized bed. According to a preferred embodiment of the present invention at least two beds of solid absorbents are used, one being used for absorption when the other is on regeneration. Regeneration of spent metal oxide absorbent is preferably carried out via oxidation using an oxygen-containing gas, such as air. Although the mechanism of absorption of $H_2S$ by means of a metal absorbent is not known with certainty, it seems that the main reactions for absorption and regeneration are:-

$$MO + H_2S \rightleftharpoons MS + H_2O \text{ (absorption)}$$

$$MS + 1{,}5O_2 \rightleftharpoons MO + S$$

The $SO_2$ liberated in the regeneration step is preferably recycled to the sulphur recovery unit for producing a further quantity of elemental sulphur. The regeneration step is preferably performed at a temperature of between 500°C and 800°C. The regeneration which is highly exothermic may be suitably controlled by limiting the oxygen supply to the metal absorbent. After regeneration of a

metal oxide absorbent, the temperature of the bed may be lowered to a suitable absorption temperature by passing a cooling medium, e.g. an inert gas over the metal oxide absorbent.

As already mentioned above, zinc oxide is preferred as metal oxide absorbent, particularly in view of its high thermal stability. The zinc oxide absorbent may for example be obtained by oxidation of zinc metal vapour or by precipitation of zinc carbonate hydrate from a solution of a zinc salt and roasting of said carbonate to convert it to oxide. The zinc oxide absorbent may be used as such in the form of finely divided particles. For promoting the acceptance behaviour, zinc oxide is suitably combined with a porous carrier material, such as silicium dioxide or one or more metal oxides, preferably oxides chosen from the group comprising copper, cadmium, titanium, zirconium, vanadium, chromium, molybdenum, tungsten, manganese, iron, cobalt and nickel. These oxides do not only promote absorption of $H_2S$ with zinc oxide, but may have also a favourable influence on the regeneration of spent zinc oxide. The most preferred metal oxide absorbent system for use in the proposed process comprises zinc oxide combined with a zeolite having a pore size greater than 0.40 nm as described in British patent application No. 8407842 of 27.03.84 and entitled "Process for removing hydrogen sulphide from gases and absorbent for use in such a process". Another suitable metal oxide absorbent system for use in the proposed process comprises zinc oxide combined with molybdenum oxide.

The invention will now be further illustrated with reference to the figure showing a flow scheme for the process according to the invention, in which figure auxiliary equipment, such as pumps, compressors, valves, control devices, is not included. However, the invention is by no means limited to this figure. Referring to the figure, 1 designates a Claus sulphur recovery unit, with a gas supply line 2, an air supply line 3, a sulphur discharge line 4 and gas discharge line 5. The sulphur recovery unit 1 incorporates a thermal stage and an after-cooler/sulphur condenser and a number

of catalytic stages with interstage coolers/sulphur condensers (not shown in the figure). In the thermal stage, $H_2S$ in a $H_2S$-containing feed gas supplied via line 2 is partially oxidized by means of air supplied via line 3 so that about 1/3 of the supplied $H_2S$ is converted to $SO_2$. The major part of the $SO_2$ reacts in the thermal unit with $H_2S$ thereby forming elemental sulphur. In the catalytic stages of the Claus unit a further portion of $SO_2$ reacts with $H_2S$ and is reduced to elemental sulphur. After condensation the sulphur is recovered from the unit via line 4. The off-gas from the Claus unit 1 comprises minor portions of $H_2S$ and $SO_2$ in a molar ratio of about 2:1. For removal of the $H_2S$ and $SO_2$ remained in the off-gas, said gas is passed via line 5 over a Claus catalyst in a reactor 6 in the presence of excess $H_2S$. Thereto a portion of the feed gas to the Claus unit 1 is passed via line 7 directly to the vessel 6. The quantity of feed gas which is directly passed to the vessel 6 is so chosen that the molar ratio of $H_2S$ to $SO_2$ of the gas mixture in the reactor 6 is maintained at a level of, for example, about 4:1. The gas mixture is passed at a temperature of about 200°C over the Claus catalyst, whereby substantially all of the $SO_2$ present in the gas mixture is reduced to elemental sulphur which partly condenses on the Claus catalyst. The second off-gas thus formed is substantially free from $SO_2$ and is passed via line 8 through an optional condensor 9 for lowering the temperature for further removal of the sulphur from the gas. Thereafter the gas is increased in temperature to a level of about 500°C (in a unit not shown) and is passed via line 10 to a vessel 11 containing a ZnO absorbent. In said vessel 11 the $H_2S$ present in the off-gas from vessel 6 is captured by the ZnO absorbent with formation of ZnS, so that the unabsorbed portion of the gas, discharged from vessel 11, is substantially free from $H_2S$, whilst the $SO_2$ has already been removed from the gas in vessel 6. The remaining gas stream may be discharged via line 12 to the atmosphere, either directly or via a not shown incinerator.

The Figure shows a flow scheme wherein a Claus unit is connected to two sets of Claus catalyst vessels 6 and ZnO absorbent vessels 11, wherein one set is used for purifying the off-gas from the Claus unit while the Claus catalyst and absorbent of the other set is being regenerated. The regeneration is carried out as follows. Air is injected into vessel 11 via line 20, whilst the temperature in the vessel is increased to about 600°C. The oxygen in the air reacts with the ZnS thereby forming ZnO and $SO_2$. The relatively hot off-gas with $SO_2$ produced is discharged from vessel 11 via line 21 and caused to flow over the catalyst in vessel 6, thereby causing vaporisation and, if residual oxygen is present, also oxidation of condensed sulphur present in the catalyst bed. The vaporized sulphur is removed from the vessel 6 by the $SO_2$-containing off-gas from the vessel 11. The discharged gas is returned to the inlet of the Claus unit 1 via line 22 for producing a further quantity of sulphur from the $SO_2$ contained in said off-gas.

The effect of increasing the molar ratio of $H_2S$ to $SO_2$ in Claus off gases prior to passing these gases over a Claus catalyst will now be illustrated by means of Tables 1, 2 and 3. Table 1 gives the compositions of a Claus off gas with an $H_2S$ to $SO_2$ molar ratio of 2:1, being a ratio representative for Claus off gas, passed over a Claus catalyst at three different temperatures viz. 100°C, 200°C and 300°C.

TABLE 1

| Compound | Gas composition feed (kmol) | Gas composition after catalytic treatment (kmol) | | |
|---|---|---|---|---|
| | | 100°C | 200°C | 300°C |
| $H_2S$ | 1.2 | 0.0366 | 0.421 | 1.189 |
| $SO_2$ | 0.6 | 0.0195 | 0.208 | 0.594 |
| $H_2O$ | 49.9 | 51.07 | 50.69 | 49.914 |
| $N_2$ | 88.8 | 88.8 | 88.8 | 88.8 |
| $CO_2$ | 1.5 | 1.5 | 1.5 | 1.5 |
| $S_8$ | | 0.218 | 0.146 | $2.05 \times 10^{-3}$ |

Table 2 gives the same results for a Claus off-gas enriched with $H_2S$ to an $H_2S/SO_2$ molar ratio of 3:1.

TABLE 2

| Compound | Gas composition feed (kmol) | Gas composition after catalytic treatment (kmol) | | |
|---|---|---|---|---|
| | | 100°C | 200°C | 300°C |
| $H_2S$ | 1.8 | 0.6 | 0.748 | 1.729 |
| $SO_2$ | 0.6 | $7.3 \times 10^{-5}$ | 0.0745 | 0.565 |
| $H_2O$ | 49.9 | 51.1 | 50.95 | 49.975 |
| $N_2$ | 88.8 | 88.8 | 88.8 | 88.8 |
| $CO_2$ | 1.5 | 1.5 | 1.5 | 1.5 |
| $S_8$ | | 0.224 | 0.197 | 0.013 |

Table 3 gives the catalytic treatment results when using as feed a Claus off-gas enriched with $H_2S$ to a molar ratio $H_2S$ to $SO_2$ of the gas of 4:1.

TABLE 3

| Compound | Gas composition feed (kmol) | Gas composition after catalytic treatment (kmol) | | |
|---|---|---|---|---|
| | | 100°C | 200°C | 300°C |
| $H_2S$ | 2.4 | 1.193 | 1.254 | 2.21 |
| $SO_2$ | 0.6 | $1.87 \times 10^{-5}$ | 0.0275 | 0.506 |
| $H_2O$ | 49.9 | 51.11 | 51.05 | 50.09 |
| $N_2$ | 88.8 | 88.8 | 88.8 | 88.8 |
| $CO_2$ | 1.5 | 1.5 | 1.5 | 1.5 |
| $S_8$ | | 0.225 | 0.214 | 0.0354 |

From the above tables it can be concluded that increasing the $H_2S/SO_2$ molar ratio and reducing the temperature in the catalytic stage cause a substantial reduction of the $SO_2$ content of the gas.

K 5721

## CLAIMS

1. A process for the removal of sulphur compounds from the off-gas of a sulphur recovery unit of the Claus type, which process comprises the following consecutive steps:-

(a) mixing the said off-gas and a gas having a higher content of hydrogen sulphide than the said off-gas to form a gas mixture having an increased hydrogen sulphide to sulphur dioxide molar ratio compared to the off-gas, passing the mixture thus formed at a temperature below 300°C over a catalyst promoting the Claus reaction, and separating a second off-gas from the said catalyst;

(b) passing the said second off-gas over a regenerable, solid metal oxide absorbent to absorb hydrogen sulphide with formation of a spent metal oxide absorbent and separating the unabsorbed portion of the second off-gas from the spent metal oxide absorbent:

(c) regenerating the spent metal oxide absorbent, thereby producing regenerated absorbent and a gas rich in sulphur compounds; and

(d) re-using in step (b) the regenerated absorbent obtained in step (c) for further hydrogen sulphide absorption and introducing the gas rich in sulphur compounds produced in step (c) into a sulphur recovery unit of the Claus type.

2. A process as claimed in claim 1, in which the gas mixture is passed over the catalyst in step (a) at a temperature below 250°C.

3. A process as claimed in claim 1 or 2, in which use is made of a molar ratio $H_2S$ to $SO_2$ of at least 3:1 in the gas mixture being passed over the catalyst.

4. A process as claimed in claim 3, in which use is made of a molar ratio $H_2S$ to $SO_2$ of at least 4:1.

5. A process as claimed in any one of the preceding claims, in which a bleedstream of the hydrogen-sulphide containing gas being fed to the sulphur recovery unit is used as the gas having a higher content of hydrogen sulphide than the said off-gas of the sulphur recovery unit.

6. A process as claimed in any one of the preceding claims, in which use is made of an aluminium oxide or of bauxite as the catalyst used in step (a).

7. A process as claimed in any one of the preceding claims, in which step (a) is carried out in a catalytic stage of the sulphur recovery unit.

8. A process as claimed in claim 7, in which step (a) is carried out in the last catalytic stage of the sulphur recovery unit.

9. A process as claimed in any one of the claims 1-6, in which step (a) is carried out in a unit separate from the sulphur recovery unit.

10. A process as claimed in claim 9, in which step (b) is carried out at a temperature below 200°C.

11. A process as claimed in any one of the preceding claims, in which the metal oxide absorbent comprises zinc oxide.

12. A process as claimed in claim 11, in which the zinc oxide is combined with a carrier material.

13. A process as claimed in claim 12, in which the carrier material is silicium dioxide.

14. A process as claimed in claim 12, in which the carrier material is chosen from the group comprising oxides of copper, cadmium, titanium, zirconium, vanadium, chromium, molybdenum, tungsten, manganese, iron, cobalt and nickel.

15. A process as claimed in any one of the claims 11-14, in which the zinc oxide absorbent is combined with a zeolite having a pore size greater than 0.40 nm.

16. A process as claimed in any one of the claims 11-15, in which the zinc oxide absorbent is combined with molybdenum oxide.

17. A process for the removal of sulphur compounds from the off-gas of a sulphur recovery unit of the Claus type, substantially as hereinbefore described with reference to the Figure.

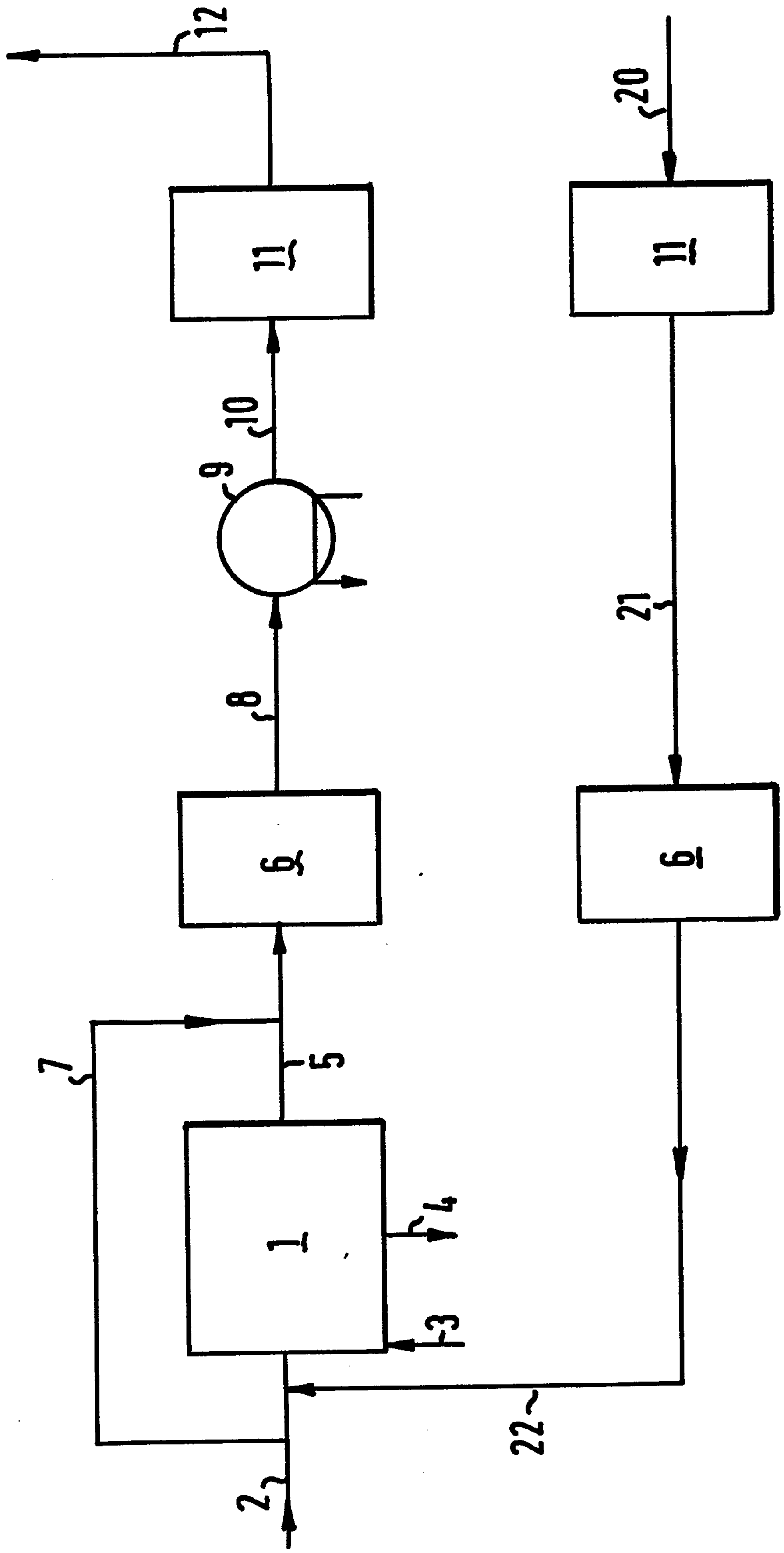
12
11
10
9
8
6
5
7
1
4
3
2
20
11
21
6
22